# EUROPEAN PATENT SPECIFICATION

(11) **EP 1 550 037 B1**
(45) Date of publication and mention of the grant of the patent: **18.10.2006**
(21) Application number: 03795131.6
(22) Date of filing: 08.09.2003
(51) Int. Cl.: G06F 11/10, H04M 1/725

(54) **SET-UP OF WIRELESS CONSUMER ELECTRONICS DEVICE USING A LEARNING REMOTE CONTROL**
EINRICHTEN EINES DRAHTLOSEN VERBRAUCHERELEKTRONIKGERÄTS UNTER VERWENDUNG EINER LERNENDEN FERNBEDIENUNG
CONFIGURATION D'UN DISPOSITIF ELECTRONIQUE DE CONSOMMATION SANS FIL A L'AIDE D'UNE TELECOMMANDE UNIVERSELLE

(30) Priority: 11.09.2002 US 242071
(43) Date of publication of application: 06.07.2005
(73) Proprietor: Koninklijke Philips Electronics N.V., 5621 BA Eindhoven (NL)
(72) Inventor: SHTEYN, Eugene, San Jose, CA 95131 (US)
(74) Representative: Groenendaal, Antonius W. M.
(86) International application number: PCT/IB2003/003822
(87) International publication number: WO 2004/025901

(56) References cited:
- WO-A-98/43427
- US-B1- 6 396 612
- PEYRARD F ET AL: "Simulations of ad-hoc WLAN with or without relay" UNIVERSAL PERSONAL COMMUNICATIONS, 1998. ICUPC '98. IEEE 1998 INTERNATIONAL CONFERENCE ON FLORENCE, ITALY 5-9 OCT. 1998, NEW YORK, NY, USA,IEEE, US, 5 October 1998 (1998-10-05), pages 711-715, XP010314907 ISBN: 0-7803-5106-1
- "PACKET RELAY SYSTEM FOR WIRELESS LAN" IBM TECHNICAL DISCLOSURE BULLETIN, IBM CORP. NEW YORK, US, vol. 39, no. 2, 1 February 1996 (1996-02-01), pages 133-135, XP000559848 ISSN: 0018-8689
- "Part 11: Wireless LAN Medium Access Control (MAC) and Physical Layer (PHY) Specifications" ANSI/IEEE STD 802.11, XX, XX, 4 May 1999 (1999-05-04), pages 1,10-69, XP002278910
- THE BLUETOOTH FORUM: "Bluetooth security" SPECIFICATION OF THE BLUETOOTH SYSTEM, 22 February 2001 (2001-02-22), pages 148-182, XP002171382

## Description

The invention pertains to the field of wireless local area networks and their set-up.

The invention also relates to control devices and more particularly to bi-directional remote controllers that can be easily reconfigured or re-loaded with new data.

The invention also pertains to security over wireless networks and more particularly to a way connected devices of the network can learn of security parameters associated with the network.

Home networking has become a growing area of the consumer electronic industry.

Wireless standards such as IEEE 802.11,Zigbee, Bluetooth, Ultrawideband and others enable transfer of digital audio/video/textual content between devices in the home. Each device needs to be installed on the network and needs to acquire knowledge of the network characteristics before it can communicate and exchange data and control information with other devices on the network. To that respect, patent document US 6,434, 447 describes a network system with Plug-and-Play capability where a controller gets an abstract representation of a new device on the network describing the modality to control a specific functionality of the device. The controller can then browse its controlling capabilities and associate the control of the device's functionality with its controlling capability with the right modality.

Wireless data communications need to be protected from deliberate corruption or eavesdropping at a much higher level than wireline communications and advance is made into this direction in most WLAN or WPAN to protect communications. For example, IEEE 802.11 incorporates privacy mechanisms to protect the content of data frames from eavesdropping with a so-called Wireless Equivalent Privacy (WEP) mechanism that provides protection at a level considered equivalent to that of a wired LAN. WEP is an encryption mechanism that takes the content of a data frame and passes it through an encryption algorithm using a variable length encryption key, the WEP key. The WEP key is known by both the encrypting and the decrypting stations. IEEE provides two mechanisms to select a WEP key for encrypting or decrypting communication data. A first mechanism is to set a default key, which is shared by all stations in the secured network. A second mechanism allows a station to establish a"key mapping"relationship with another station.

An advantage of the second mechanism over the first one is that the fewer stations possessing the key, the less likely the key will be revealed. However the first mechanism enables any station to communicate securely with all other stations in the network.

In locales where multiple WLANs coexist, security parameters may be uniquely associated with a group of one or more stations forming a WLAN. A station may therefore independently communicate over each of the various secure overlapping wireless networks using different sets of security parameters respecting the various WLANs. Each set of security parameters may be stored in respective network profiles that the station can retrieve when needed. Co-pending U. S. patent application "Autodetection of wireless network accessibility", serial No. 10/151,360, attorney docket number US020132, discloses a system for determining whether a user device may communicate in a detected wireless network based on profiles of security parameters of the device. If it is determined that one of the profiles of the device contains the right security parameters for the detected network, then the user is notified and the device is enabled, and may even be configured, to communicate over the network.

Thus, for a station to communicate over a secure network, it needs to learn of the encryption key or any other security parameter necessary to secure communication over the network. Plug-and-Play devices require minimal user's involvement during device installation whereas in the case of secured wireless networks, the user is often obliged to enter security parameters manually or to perform complicated and burdensome manipulations in order to build up the required security layers.

Network privacy issues may imply advanced set up and specific configuration of the device that can easily become a burden or a discouraging task for a non-expert user. The inventor has realized that there is a need for an easy and secure way of configuring a new device to operate over a network.

US Patent No 6,396, 612 describes a system wherein two stations communicate using a wireless network. The communication is encrypted using an encryption key. Prior to using encrypted transmission using the encryption key, the stations switch to an infrared mode of communication, wherein they exchange the encryption key, without risk that the encryption key will be intercepted by a third party. The risk is minimized because, the communication distance in the infrared mode is much shorter than in the wireless network.

WO 98/43427 describes a system wherein a PIN number for authorizing a financial transaction is entered into a remote controller with infrared capability and transmitted to a television.

It is an object of the invention to provide a system that permits easy, fast and reliable configuration of new devices in secured networks.

It is another object of the invention to advantageously use existing IR capability of some consumer electronic devices for installation of these devices over a wireless network.

To this end, a remote controller according to claim 1 is provided. A system of the invention comprises an entry module for enabling inputting a set of security parameters comprising at least an encryption key for encryption of communication over a wireless network. The device also comprises a storage arrangement for storing the set of security parameters and an infrared emitter. The device communicates to a first infrared-controllable apparatus an infrared signal respecting the set of security parameters for set-up of a second apparatus over the wireless network. The invention further relates to a method for installing a controllable apparatus in a wireless network and communicating the set of security parameters to the apparatus via an infrared signal.

A device of the invention is loaded with the security parameters so that it can further convey these parameters to the first apparatus via infrared. In an embodiment, the first and the second apparatuses may actually be one apparatus and in such case the apparatus, which is installed on the wireless network has IR capability. Alternately, the first and second apparatuses are connected to each other, via wireless or wireline link, and the first apparatus, which receives the set of security parameters, may convey these to the second apparatus. A device of the invention may be a conventional learning remote controller such as the Pronto currently manufactured by Philips. Such a remote controller may be configured to control any device in the home by loading into it new data and new command codes that the controller uses to generate new control commands. Thus, the remote controller may be loaded with the security parameters so that these, especially the encryption key, can be further transmitted to apparatuses that are controllable through IR commands. IR technology can be easily implemented at a reasonable price and most consumer electronic devices are manufactured with built-inIR capability. Advantage is therefore taken in the invention of the widespread of IR technology to enableIR- controllable apparatuses to learn of security parameters specific to a wireless network. One or more embodiments of the invention therefore provide an easy way to install devices on a secure wireless network that have both wireless capabilities to communicate over a wireless network and built-in IR-capabilities.

In an embodiment the infrared signal is communicated using the RC6 infrared protocol, which is known per se.

The invention is explained in further details, by way of examples, and with reference to the accompanying drawing wherein:
Fig.1 illustrates the use of a device of the invention;
Fig.2 is a device of the invention; and,
Fig.3 and Fig.4 illustrate other uses of a device of the invention.

Elements within the drawing having similar or corresponding features are identified by like reference numerals.
The invention relates to an installation process for initial set up of a new device on an existing wireless network. In order for the device to communicate over the network, it needs to acquire the security parameters in use on the network. For example, such security parameters comprise an encryption key used by stations of the network to secure communications. This encryption key may be a 64-bit key, a key generation algorithm or an encryption pattern. In the invention, advantage is taken of the fact that the device that will be installed on the network has IR-capability. If the device does not have the right IR-capability advantage is taken of the fact that the device may communicate with another device that has IR-capability. Such device is, for example, a set-top box, a television, a stereo system at home that is conventionally controlled through IR commands from a remote controller or any device in the home that is connected via a wireless or a wireline link to another IR-capable device. In the installation process of the device on the network, the remote controller is loaded with the security parameters respecting the wireless network. The remote controller is for example temporarily connected to the access point of the network, which transmits the parameters to the remote controller in a secure fashion. The remote controller may also be connected to a trusted device of the wireless network such as a personal computer to which the access point is connected. The remote controller, which is configured to control the device via IR commands, may then easily communicate the security parameters to the device. This installation process may be rendered feasible by the download on the remote controller of a software application, which enables the remote controller to receive the security parameters and which further enables the remote controller to convey these security parameters to the device through modulation of an IR signal. The remote controller may further configure the device to recognize the transmitted security parameters as such.

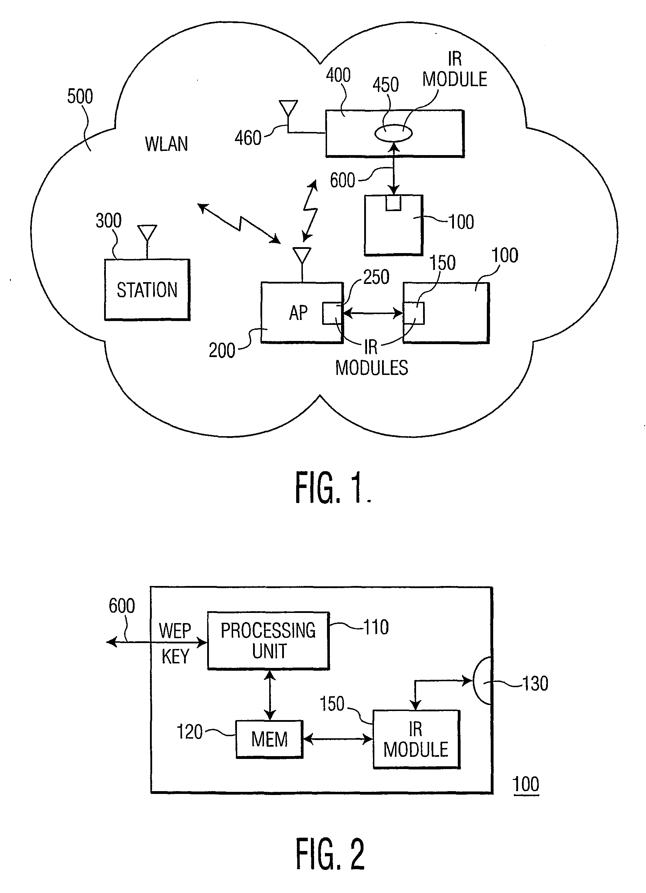

Fig.1 is a block diagram of a system illustrating the installation of device 400 onto wireless local area network 500. Network 500, e.g. an IEEE 802.11 compliant network, includes access point 200 and station 300. Station 300 may be a device in the home such as a stereo system. This embodiment is described hereinafter in the context of the installation of device 400 onto network 500. Device 400 has built 802.11 capability for communicating over wireless network 500. Device 400 is, for example, a personal entertainment set-top box pre-equipped with an embedded wireless module, of which only antenna 460 is shown, that will enable device 400 to receive digital audio and video content from another station or the access point 200 in the home once device 400 is installed onto network 500.

Device 400 may be controlled via remote controller 100 through IR control commands. To this end, controller 100 and device 400 respectively comprise IR modules 150 and 450 with both IR sensors and transmitters enabling controller 100 and device 400 to receive and transmit IR modulated coded data. Controller 100 may be a bi-directional controlling device that can be set-up to control new devices and new functionalities. Controller 100 can be set in a learning mode in which controller can receive new data and new control code from which controller 100 is configured to generate new control commands. A more detailed embodiment of controller 100 is shown in Fig.2. Controller 100 comprises processing unit 110, memory 120, IR module 150 and IR receiver/transmitter 130. IR receiver/transmitter 130 may also be enclosed in IR module 150. Processing unit 110 may have the minimum required processing power to process incoming IR signals and process user inputs to effect changes by generating IR signals. In another embodiment, controller 100 may also comprise a display and processing unit 110 may comprise additional processing power to process audio and video data, e.g. processing unit may comprise an MPEG-4 codec for playing video clips onto display of controller 100. Controller 110 may also be a cellular phone or a personal digital assistant with built-in IR and loaded with a software application that enables it to control devices and learn new control commands.

In this embodiment, network 500 is an IEEE 802.11 compliant network using a WEP privacy mechanism to secure communications and prevent eavesdropping. It must be noted that the invention encompasses any type of wireless network other than IEEE 802.11 that require use of security parameters to ensure privacy of communications over the network.

Any station desiring to communicate over network 500 needs to first acquire the security parameters associated with network 500 and more particularly the WEP key currently in use. In this embodiment the WEP key is initially set up by access point 200 and is known by both access point 200 and station 300 already installed onto network 500.

In the invention, the user inputs the security parameters 600 into device 400 by means of controller 100 as will be explained as follows. As mentioned previously, the set of security parameters 600 respecting network 500 is currently known by access point 200 and station 300. Device 400 may thus get the security parameters 600 from either access point 200 or station 300. In another embodiment, the user may directly enter the security parameters 600 and the WEP key into controller 100 via a user interface or a keyboard coupled with or of the controller 100. In this embodiment, security parameters 600 are communicated to device 400 from access point 200 via infrared signals. Access point 200 comprises a bi-directional infrared module 250. Controller 100 is temporarily set in a learning mode, in which mode controller 100 is configured to receive new data, e.g. new control codes from another device for later use. Once in the learning mode, controller 100 is placed so that the IR sensor of module 150 is in the emitting range of module 250. The user then initiates the transfer of security parameters 600 from access point 200 to controller 100. Controller 100 stores the received security parameters 600 in memory 120. Processing unit 110, or memory 120, may have been previously loaded with a software application that enables the transfer of the security parameters from access point 200 to device 400 according to the invention. Controller 100 may be configured to store the security parameters 600 specific to network 500 in a more secure fashion than controller 100 typically stores codes for regular control commands so that security parameters cannot be easily hacked from controller 100. In addition, the security parameters 600 may be further encrypted before modulation over IR when transmitted from access point 200 to device 400 for increased security.

This embodiment as shown in Fig.1 uses infrared technology to convey the security parameters 600 including the WEP key from the access point 200 to the controller 100 however Fig.2 shows that any other type of data link may also be used to securely transfer the security parameters 600 such as a wireline link, e.g. serial or USB link. Upon transmission to controller 100, processing unit 110 controls the storage of the security parameters 600 into memory 120.

Controller 100 is thereafter set in a control mode, in which controller can transmit information data and control commands to other devices in the home. As mentioned earlier device 400 has an IR module 450 comprising an IR sensor. Controller 100 is placed so that the IR transmitter 130 is placed in the receiving range of IR sensor of module 450. The user may then initiate the transfer of an IR signal representative of the security parameters 600 stored in memory 120 to device 400. Module 150 generates the signal 600 by modulation of IR rays with the security parameters.

To that respect, US 5,877,702 of the same assignee discloses a remote control system for transmitting messages whose length is adapted to the nature of the operating command and the quantity of information to be transmitted. It must be noted that the security parameters 600 may be sent as a macro from and to controller 100. A macro is a pre-programmed series of commands sent from a first device to a second device to operate the second device. The IR protocol used for the transfer of security parameters 600 from/to controller 100 may determine the control commands' maximum lengths that controller 100 may send. Thus, depending on the IR protocol used, controller 100 may have to send more than one command to transfer security parameters 600 as a macro.

Device 400 may be configured to automatically recognize security parameters 600 including the WEP key from the received IR signal. Alternately in another embodiment, the user may have to preset device 400 to indicate that the IR signal received from controller 100 includes security parameters 600 respecting network 500. In an embodiment of the invention, the controller 100 comprises a macro that upon selection permits to transmit control commands to device 400 that are equivalent to the user manually setting up device 400 with the security parameters of network 500. To that respect, US 5,414,426 discloses a remote controller with an entry/definition program that enables a user of the remote controller to define a macro for selecting at least one favorite channel by entry of a series of keystroke commands on the keyboard of the remote controller. The remote controller comprises a playback program in its memory for enabling an operator of the remote controller to effect rapid selection of at least one favorite channel upon subsequent depression of the MACRO key.

Installation of device 400 onto network 500 may then be conventionally pursued after device 400 receives security parameters 600 with the WEP key. Indeed, once device 400 has the WEP key the authentication process as described in the IEEE 802.11 standard may then be carried out between device 400 and access point 200.

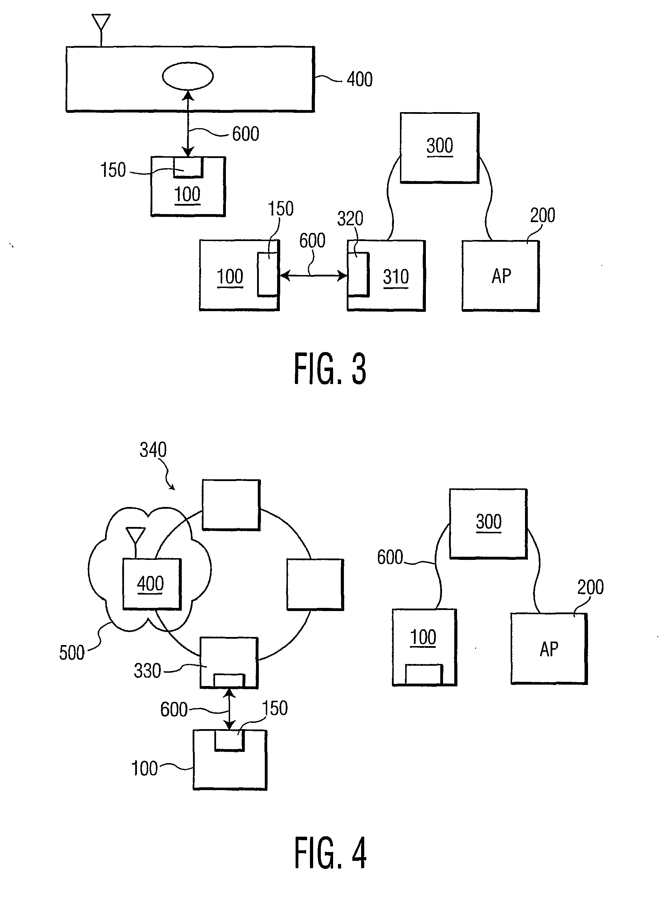

Fig.2 and Fig.3 illustrate other possible embodiments of the invention. Fig.3 illustrates an embodiment where device 100 acquires security parameters from a dongle 310 connected to a personal computer 300 further connected to access point 200. Dongle 310 may be an IR transmitter/receiver only that enables transmitting IR signals representative of data provided at its input. Dongle 310 is connected to PC 300 via a wireless, e.g. Bluetooth or wireline link, e.g. USB, which is preferably secure, i.e. data is encrypted before transmission from PC 300 to dongle 310. PC 300 is a trusted device and communication between access point 200 and PC 300 is also secure. Security parameters 600 may be obtained from access point 200 as follows. The user may depress a button "acquire security parameters for acquiring security parameters 600 or a profile of network 500. Upon the user depressing the button, controller 100 is set in learning mode and requests security parameters 600 from dongle 310. Security parameters 600 may be stored in PC 300 in a network profile of network 500 stored in PC 300. Alternately, PC 300 requests security parameters 600 from access point 200. Dongle then transmits security parameters 600 obtained from PC 300 to controller 100 via an IR module 320. The user may then transfer security parameters 600 to device 400 by depressing a button "transfer security parameters". Device 400 thereafter transfers security parameters 600 to device 400 as described above with reference to Fig.1.

Fig.4 illustrates another embodiment of the invention. In this embodiment, controller 100 is connected to PC 300, e.g. through a USB port and acquires security parameters 600 from PC 300 directly. However in this embodiment controller 100 does not transmit security parameters 600 directly to device 400. Device 400 belongs to a network 340, which also comprises at least device 330. Network 340 is for example a UPnP network, an Apple's RendezVous network or another wireless network different from network 500. Device 330 and device 400 may securely communicate with each other over network 340. In this embodiment, device 330 is IR-capable and may be controlled via controller 100. The user transmits security parameters 600 to device 330 via IR commands from controller 100 and device 330 thereafter conveys security parameters 600 to device 400 over network 340. For example, device 330 transmits UPnP commands to device 400 respecting security parameters 600.

It is to be noted that, with respect to the described method, modifications or improvements may be proposed without departing from the scope of the invention. For instance, it is clear that this method may be implemented in several manners, such as by means of wired electronic circuits or, alternatively, by means of a set of instructions stored in a computer-readable medium, said instructions replacing at least part of said circuits and being executable under the control of a computer or a digital processor in order to carry out the same functions as fulfilled in said replaced circuits. The invention is thus not limited to the examples provided.

## Claims

1. A remote controller (100) comprising:
an entry module (150) for enabling to input a security parameter (600);
a storage arrangement (120); and
an infrared emitter (150) for transmitting an infrared signal respecting the security parameter (600) to an infrared-controllable apparatus (400, 330) that is infrared-controllable by said remote controller,
**characterized in that**
the storage arrangement (120) is configured for storing the security parameter; and
the security parameter comprises at least an encryption key for an encryption of communication over a wireless network (500) between a device (400) and a further device, the security parameter being configured for a transfer from the infrared -controllable apparatus to the device (400) for set-up of the device (400) to communicate over the wireless network (500) with the further device using the security parameter, the device (400) being part of the infrared-controllable apparatus or being coupled to the infrared-controllable apparatus.

2. The remote controller of claim 1, wherein the entry module comprises a user interface, coupled to the storage arrangement, for enabling a user to manually enter the encryption key via the user interface.

3. The remote controller of claim 1, wherein the entry module comprises a keyboard.

4. The remote controller of claim 1, wherein the entry module further comprises a connector for transferring the security parameter from an access point of the wireless network to the device.

5. The remote controller of claim 1, wherein the entry module further comprises a connector for connecting the device to another trusted device that is coupled to an access point of the wireless network.

6. The remote controller of claim 1, wherein the infrared emitter is arranged to communicate using a RC6 infrared protocol.

7. The remote controller of claim 1, wherein the wireless network is an IEEE802.11 network and the security parameter comprises a Wired Equivalent Privacy key.

8. A system comprising a remote controller, a device (400) and an infrared controllable apparatus as claimed in any one of claims 1 to 7.

9. A method of enabling a transfer of a security parameter (600) to a device (400), the method comprising the steps of:
enabling to communicate the security parameter (600) to a remote controller (100) equipped with infrared capability;
enabling the remote controller (100) to communicate to an infrared-controllable apparatus (330, 400), which is controllable by the remote controller, an infrared signal respecting the security parameter (660),
**characterized in that**
the security parameter comprises at least an encryption key for an encryption of communication over a wireless network (500) between the device (400) and a further device,
the method further comprising
a step of enabling the remote controller (100) to store the security parameter (600); and
a step of conveying the security parameter from the infrared controllable apparatus to the device (400) for set-up of the device (400) to communicate over the wireless network (500) with the further device using the security parameter, wherein
the device (400) is part of the infrared-controllable apparatus or coupled to the infrared-controllable apparatus.

10. The method of claim 9, wherein the infrared-controllable apparatus and the device communicate over a network being one of: UPnP, IEEE 802.11, RendezVous, Bluetooth or Zigbee.

11. The method of claim 9, further comprising: further enabling a user to manually enter the security parameter.

12. The method of claim 9, wherein the security parameter is communicated from another trusted device of the wireless network to the remote controller.

13. The method of claim 12, wherein the trusted device is an access point of the wireless network.

14. The method of claim 9, wherein the infrared signal is communicated using the RC6 infrared protocol.

15. The method of claim 9, wherein the wireless network is an IEEE802.11 compliant network and the security parameter comprises a Wired Equivalent Privacy key.

16. A software application comprising computer executable instructions stored on a medium for performing the following steps:
enabling to communicate a security parameter (600) to a remote controller (100) equipped with infrared capability;
enabling the remote controller (100) to store the security parameter (600);
enabling the remote controller (100) to communicate to an infrared-controllable apparatus (330, 400), which is controllable by the remote controller, an infrared signal respecting the security parameter (660),
**characterized in that**
the security parameter comprises at least an encryption key for an encryption of communication over a wireless network (500) between the device (400) and a further device,
the instructions are further adapted for performing
a step of enabling the remote controller (100) to store the security parameter (600); and
a step of conveying the security parameter from the infrared -controllable apparatus to a device (400) for set-up of the device (400) to communicate over the wireless network (500) with the further device using the security parameter, wherein
the device (400) is part of the infrared-controllable apparatus or coupled to the infrared-controllable apparatus.

## Patentansprüche

1. Fernbedienung (100), die Folgendes umfasst:
- ein Eingabemodul (150) um Eingabe eines Sicherheitsparameters (600) zu ermöglichen
- eine Speicheranordnung (120), und
- einen IR-Sender (150) zum Übertragen eines IR-Signals in Bezug auf den Sicherheitsparameter (600) zu einem IR-steuerbaren Gerät (400, 330), das mit Hilfe der genannten Fernbedienung IR-steuerbar ist,
**dadurch gekennzeichnet, dass**
- die Speicheranordnung (120) zur Speicherung des Sicherheitsparameters konfiguriert ist, und
- der Sicherheitsparameter wenigstens einen Verschlüsselungsschlüssel aufweist für eine Verschlüsselung der Kommunikation über ein drahtloses Netzwerk (500) zwischen einer Anordnung (400) und einer weiteren Anordnung, wobei der Sicherheitsparameter für einen Transport von dem IR-steuerbaren Gerät zu der Anordnung (400) für die Aufstellung der Anordnung (400) konfiguriert ist um unter Verwendung des Sicherheitsparameters über das drahtlose Netzwerk (500) mit der weiteren Anordnung zu kommunizieren, wobei die Anordnung ein Teil des IR-steuerbaren Gerätes ist oder mit dem IR-steuerbaren Gerät gekoppelt ist.

2. Fernbedienung nach Anspruch 1, wobei das Eingabemodul eine Benutzerschnittstelle aufweist, die mit der Speicheranordnung gekoppelt ist, und zwar um einem Benutzer die Möglichkeit zu bieten, von hand den Verschlüsselungsschlüssel über die Benutzerschnittstelle einzugeben.

3. Fernbedienung nach Anspruch 1, wobei das Eingabemodul ein Tastenfeld aufweist.

4. Fernbedienung nach Anspruch 1, wobei das Eingabemodul weiterhin ein Verbindungselement aufweist zum Transportieren des Sicherheitsparameters von einem Zugriffspunkt des drahtlosen Netzwerkes zu der Anordnung.

5. Fernbedienung nach Anspruch 1, wobei das Eingabemodul weiterhin ein Verbindungselement aufweist zum verbinden der Anordnung mit einer anderen vertrauten Anordnung, die mit einem Zugriffspunkt des drahtlosen Netzwerkes gekoppelt ist.

6. Fernbedienung nach Anspruch 1, wobei der IR-Sender dazu vorgesehen ist, unter Anwendung eines RC6 IR-Protokolls zu kommunizieren.

7. Fernbedienung nach Anspruch 1, wobei das drahtlose Netzwerk ein IE-EE802.11 Netzwerk ist und der Sicherheitsparameter einen "Wired Equivalent Privacy" Schlüssel enthält.

8. System mit einer Fernbedienung, einer Anordnung (400) und einem IR-steuerbaren Gerät nach einem der Ansprüche 1 bis 7.

9. Verfahren zum Ermöglichen eines Transportes eines Sicherheitsparameters (600) zu einer Anordnung (400), wobei das Verfahren die nachfolgenden Verfahrensschritte umfasst:
- das Ermöglichen einer Kommunikation des Sicherheitsparameters (600) zu einer Fernbedienung (100), die mit IR-Fähigkeiten versehen ist,
- das Ermöglichen einer Kommunikation eines IR-Signals in Bezug auf den Sicherheitsparameter (660) zwischen einer Fernbedienung (100) und einem fernsteuerbaren Gerät (330, 400), das durch die Fernbedienung steuerbar ist,
**dadurch gekennzeichnet, dass**
- der Sicherheitsparameter wenigstens einen Verschlüsselungsschlüssel aufweist zum Verschlüsseln der Kommunikation über ein drahtloses Netzwerk (500) zwischen der Anordnung (400) und einer weiteren Anordnung,
wobei das Verfahren weiterhin die nachfolgenden Verfahrensschritte umfasst:
- einen Schritt um es zu ermöglichen, dass die Fernbedienung (100) den Sicherheitsparameter (600) speichert, und
- einen Schritt zum Transportieren des Sicherheitsparameters von dem IR-steuerbaren Gerät zu der Anordnung (400) für die Aufstellung der Anordnung (400) um Unter Anwendung des Sicherheitsparameters über das drahtlose Netzwerk (500) mit der weiteren Anordnung zu kommunizieren, wobei
- die Anordnung (400) ein Teil des IR-steuerbaren Geräts ist oder mit dem IR-steuerbaren Gerät gekoppelt ist.

10. Verfahren nach Anspruch 9, wobei das IR-steuerbare Gerät und die Anordnung über ein Netzwerk kommunizieren, das eines von den untenstehenden ist: UPnP, IEEE802.11, RendezVous, Bluetooth oder Zigbee.

11. Verfahren nach Anspruch 9, das weiterhin Folgendes umfasst: das Ermöglichen, dass ein Benutzer von hand den Sicherheitsparameter eingibt.

12. Verfahren nach Anspruch 9, wobei der Sicherheitsparameter von einer anderen vertrauten Anordnung des drahtlosen Netzwerkes zu der Fernbedienung kommuniziert wird.

13. Verfahren nach Anspruch 12, wobei die vertraute Anordnung ein Zugriffspunkt des drahtlosen Netzwerkes ist.

14. Verfahren nach Anspruch 9, wobei das IR-Signal unter Anwendung des RC6 IR-Protokolls kommuniziert wird.

15. Verfahren nach Anspruch 9, wobei das drahtlose Netzwerk ein mit IEEE802.11 übereinstimmendes Netzwerk ist und der Sicherheitsparameter einen "Wired Equivalent Privacy" Schlüssel aufweist.

16. Software-Applikation mit von einem Computer durchführbaren Instruktionen, die auf einem Medium gespeichert sind zum Durchführen der nachfolgenden Verfahrensschritte:
- das Ermöglichen, dass die Fernbedienung (100) den Sicherheitsparameter (600) speichert;
- das Ermöglichen, dass die Fernbedienung (100) einem IR-steuerbaren Gerät (330, 400), das mit Hilfe der Fernbedienung steuerbar ist, ein IR-Signal in Bezug auf den Sicherheitsparameter (660) kommuniziert,
**dadurch gekennzeichnet, dass**
- der Sicherheitsparameter wenigstens einen Verschlüsselungsschlüssel aufweist für eine Verschlüsselung der Kommunikation über ein drahtloses Netzwerk (500) zwischen der Anordnung (400) und einer weiteren Anordnung,
- die Instruktionen weiterhin dazu vorgesehen sind um Folgendes durchzuführen:
- einen Schritt um es zu ermöglichen, dass die Fernbedienung (100) den Sicherheitsparameter (600) speichert; und
- einen Schritt zum Transportieren des Sicherheitsparameters von dem IR-steuerbaren Gerät zu einer Anordnung (400) zum Aufstellen der Anordnung (400) zur Kommunikation über das drahtlose Netzwerk (500) mit der weiteren Anordnung, und zwar unter Anwendung des Sicherheitsparameters, wobei
- die Anordnung (400) ein Teil des IR-steuerbaren Geräts ist oder mit dem IR-steuerbaren Gerät gekoppelt ist.

## Revendications

1. Commande à distance (100) comprenant :
un module d'entrée (150) pour permettre l'introduction d'un paramètre de sécurité (600);
un aménagement de stockage (120); et
un émetteur infrarouge (150) pour émettre un signal infrarouge relatif au paramètre de sécurité (600) vers un appareil pouvant être commandé par infrarouge (400, 330) qui peut être commandé par infrarouge par ladite commande à distance,
**caractérisée en ce que**
l'aménagement de stockage (120) est configuré pour stocker le paramètre de sécurité; et
le paramètre de sécurité comprend au moins une clé de chiffrement pour un chiffrement de communication dans un réseau sans fil (500) entre un dispositif (400) et un dispositif additionnel, le paramètre de sécurité étant configuré pour un transfert à partir de l'appareil qui peut être commandé par infrarouge au dispositif (400) pour configurer le dispositif (400) pour communiquer dans le réseau sans fil (500) avec le dispositif additionnel en utilisant le paramètre de sécurité, le dispositif (400) faisant partie de l'appareil qui peut être commandé par infrarouge ou étant couplé à l'appareil qui peut être commandé par infrarouge.

2. Commande à distance selon la revendication 1, dans laquelle le module d'entrée comprend une interface utilisateur, couplée à l'aménagement de stockage, pour permettre à un utilisateur d'entrer manuellement la clé de chiffrement via l'interface utilisateur.

3. Commande à distance selon la revendication 1, dans laquelle le module d'entrée comprend un clavier.

4. Commande à distance selon la revendication 1, dans laquelle le module d'entrée comprend en outre un connecteur pour transférer le paramètre de sécurité d'un point d'accès du réseau sans fil au dispositif.

5. Commande à distance selon la revendication 1, dans laquelle le module d'entrée comprend en outre un connecteur pour connecter le dispositif à un autre dispositif de confiance qui est couplé à un point d'accès du réseau sans fil.

6. Commande à distance selon la revendication 1, dans laquelle l'émetteur infrarouge est aménagé pour communiquer en utilisant un protocole infrarouge RC6.

7. Commande à distance selon la revendication 1, dans laquelle le réseau sans fil est un réseau IEEE 802.11 et le paramètre de sécurité comprend une clé de Protection Equivalente au Câblé.

8. Système comprenant une commande à distance, un dispositif (400) et un appareil qui peut être commandé par infrarouge selon l'une quelconque des revendications 1 à 7.

9. Procédé pour permettre un transfert d'un paramètre de sécurité (600) à un dispositif (400), le procédé comprenant les étapes de :
permettre de communiquer le paramètre de sécurité (600) à une commande à distance (100) équipée d'une capacité infrarouge;
permettre à la commande à distance (100) de communiquer à un appareil pouvant être commandé par infrarouge (330, 400), qui peut être commandé par la commande à distance, un signal infrarouge relatif au paramètre de sécurité (660),
**caractérisé en ce que**
le paramètre de sécurité comprend au moins une clé de chiffrement pour un chiffrement de communication dans un réseau sans fil (500) entre le dispositif (400) et un dispositif additionnel,
le procédé comprenant en outre
une étape d'activation de la commande à distance (100) pour stocker le paramètre de sécurité (600); et
une étape de communication du paramètre de sécurité de l'appareil qui peut être commandé par infrarouge au dispositif (400) pour configuration du dispositif (400) pour communiquer dans le réseau sans fil (500) avec le dispositif additionnel en utilisant le paramètre de sécurité, dans lequel
le dispositif (400) fait partie de l'appareil pouvant être commandé par infrarouge ou est couplé à l'appareil qui peut être commandé par infrarouge.

10. Procédé selon la revendication 9, dans lequel l'appareil qui peut être commandé par infrarouge et le dispositif communiquent dans un réseau de type : UPnP, IEEE 802.11, RendezVous, Bluetooth ou Zigbee.

11. Procédé selon la revendication 9, comprenant en outre : permettre en outre à un utilisateur d'entrer manuellement le paramètre de sécurité.

12. Procédé selon la revendication 9, dans lequel le paramètre de sécurité est communiqué à partir d'un autre dispositif de confiance du réseau sans fil à la commande à distance.

13. Procédé selon la revendication 12, dans lequel le dispositif de confiance est un point d'accès du réseau sans fil.

14. Procédé selon la revendication 9, dans lequel le signal infrarouge est communiqué en utilisant le protocole infrarouge RC6.

15. Procédé selon la revendication 9, dans lequel le réseau sans fil est un réseau conforme IEEE 802.11 et le paramètre de sécurité comprend une clé WEP.

16. Application logicielle comprenant des instructions exécutables par un ordinateur stockées sur un support pour réaliser les étapes suivantes :
permettre de communiquer un paramètre de sécurité (600) à une commande à distance (100) équipée d'une capacité infrarouge;
permettre à la commande à distance (100) de stocker le paramètre de sécurité (600);
permettre à la commande à distance (100) de communiquer à un appareil qui peut être commandé par infrarouge (330, 400), qui peut être commandé par la commande à distance, un signal infrarouge relatif au paramètre de sécurité (660),
**caractérisée en ce que**
le paramètre de sécurité comprend au moins une clé de chiffrement pour un chiffrement de communication dans un réseau sans fil (500) entre le dispositif (400) et un dispositif additionnel,
les instructions étant en outre adaptées pour réaliser
une étape d'activation de la commande à distance (100) pour stocker le paramètre de sécurité (600); et
une étape de communication du paramètre de sécurité de l'appareil qui peut être commandé par infrarouge à un dispositif (400) pour configuration du dispositif (400) pour communiquer dans le réseau sans fil (500) avec le dispositif additionnel en utilisant le paramètre de sécurité, dans lequel
le dispositif (400) fait partie de l'appareil qui peut être commandé par infrarouge ou est couplé à l'appareil qui peut être commandé par infrarouge.
